# EUROPÄISCHE PATENTSCHRIFT

(11) **EP 0 532 989 B1**
(45) Veröffentlichungstag und Bekanntmachung des Hinweises auf die Patenterteilung: **05.02.1997**
(21) Anmeldenummer: 92115095.9
(22) Anmeldetag: 03.09.1992
(51) Int. Cl.: E05B 49/00, G07C 9/00

(54) **Einrichtung zur berührungslosen Energie- und Datenübertragung**
Wireless transmission equipment for power and data transmission
Dispositif de transmission sans fil d'énergie et de données

(30) Priorität: 17.09.1991 DE 4130903
(43) Veröffentlichungstag der Anmeldung: 24.03.1993
(73) Patentinhaber: SIEMENS AKTIENGESELLSCHAFT, 80333 München (DE); BKS GmbH, D-42549 Velbert (DE)
(72) Erfinder: Beckers, Paul, Dipl.-Ing., W-5161 Merzenich (DE)
(74) Vertreter: Fuchs, Franz-Josef, Dr.-Ing.

(56) Entgegenhaltungen:
- EP-A- 0 227 589
- EP-A- 0 356 334
- FR-A- 2 542 792

## Beschreibung

Die Erfindung betrifft eine Einrichtung zur berührungslosen Energie- und Datenübertragung, insbesondere für ein programmierbares, elektronisches Identifikationssystem, mit einer stromversorgten elektrischen Primäreinheit mit elektronischer Ansteuerung und einer elektrischen Sekundäreinheit, wobei diese über induktive Koppelelemente gekoppelt sind und wobei die Primäreinheit informationsmodulierte Energieimpulse aussendet, die auf die Sekundäreinheit wirken, die ein die Energieimpulse ausnutzendes Energieversorgungs- und Empfangssystem aufweist, wobei durch das Energieversorgungssystem eine Rückwirkung auf die Primäreinheit bewirkt wird.

Aus dem Industrie- und Hausbereich sind Verfahren zur berührungslosen Energie- und Datenübertragung bekannt. Die Energieübertragung erfolgt dabei über eine Kopplung mittels Antennenspulen, während die Datenübertragung sowohl elektrisch, z.B. über Modulation einer elektromagnetischen Welle, als auch optisch, z.B. über optoelektronische Elemente, erfolgt.

Die bekannten Verfahren mittels Antennenkopplung sind jedoch relativ störanfällig, da die Informationsübertragung durch andere Sender, Oberwellen etc. gestört werden kann. Die gesetzlichen Störpegel-Vorschriften führen darüber hinaus zu erheblichen Auslegungseinschränkungen. Eine Informationsübertragung auf optischem Wege hat den Nachteil, daß der Wirkungsbereich, z.B. durch Verschmutzung oder Lagefehler der Übertragungselemente, eingeschränkt ist.

Aus der DE-OS 37 14 195 ist z.B. ein Verfahren zur berührungslosen Energie- und Datenübertragung zwischen einer stromversorgten Hauptelektronik und einer nicht-stromversorgten Teilelektronik mit einer Energiespeicherschaltung über jeweils mit der Haupt- bzw. Teilelektronik verbundene Koppelelemente bekannt. Hierbei sind Haupt- und Teilelektronik jeweils mit einem HF-Oszillator, Modulator, Demodulator und Datenrichtungsschalter ausgestattet. Der Energie- und Datenaustausch wird von einem Microcontroller so gesteuert, daß abwechselnd Energie und Daten über die Koppelelemente übertragen werden und die Startzeitpunkte der Datensequenzen der Teilelektronik mit den Abläufen der Hauptelektonik sychronisiert sind. Der Datenaustausch wird über Datenrichtungsschalter in den jeweiligen Elektroniken gesteuert. Zum Datenaustausch wird eine Ablaufsteuerung in der Teilelektronik benötigt. Diese muß mit der Hauptelektronik synchronisiert werden, was bei Parameteränderungen der verwendeten Bauteile zu Störungen führen kann. Ein weiterer Nachteil besteht darin, daß die Teilelektronik mit eigenem HF-Oszillator und Modulator ausgestattet ist, was den Bauteil - und damit Kostenaufwand erheblich macht. Langzeitprobleme sind nicht auszuschließen.

Aus der Offenlegungsschrift DE-OS 26 34 303 ist z.B. eine elektronische Schließeinrichtung mit Identifikationssystem bekannt, wobei über die in Schloß bzw. Schlüssel vorhandene Spule ein Energieaustausch und wechselseitiger Informationsaustausch berührungslos möglich ist. Bei der bekannten Schließeinrichtung wird ein HF-Oszillator verwendet, der ein Signal hoher Frequenz aussendet, welches verstärkt einer Sende- Empfangsspule zugeführt wird und in deren Umgebung ein hochfrequentes elektromagnetisches Feld aufbaut. Bei Annäherung eines elektronischen Schlüssels wird in der Sende- und Empfangsspule eine Spannung gleicher Frequenz induziert wobei diese einerseits zur Energieversorgung und andererseits zur Signalgewinnung weiter verarbeitet wird. Die Rückübertragung von der Schlüsseleinheit zur Schließeinheit erfolgt über eine Belastungsänderung in der Schlüsselelektronik, deren Auswirkung in der Schloßelektronik ausgewertet wird.

Bei der bekannten Verfahrensweise ist nachteilig, daß die Energie- und Datenübertragung über eine Kopplung mittels Antennenspulen erfolgt. Die einzukoppelnde Energie ist aufgrund des begrenzten Energietransports über elektromagnetische Wellen gering, und die Übertragung kann leicht durch andere Sender, Oberwellen etc. gestört werden. Weiterhin sind Oszillatorschaltungen äußerst abhängig von den Parameteränderungen ihrer Bauteile. Eine Einzelabstimmung ist erforderlich.

Eine weitere Identifikationslösung wird in der DE-OS 35 00 353 vorgeschlagen, wobei ein Schloß mit einem Detektor und ein Schlüssel mit einem Gegendetektor versehen ist und wobei Detektor und Gegendetektor Sende- und Empfangsteile zweier elektrischer Hochfrequenzschwingkreise sind, die noch aufeinander abgestimmt werden müssen. Derartige Abstimmungen sind kostenaufwendig und haben ein schlechtes Langzeitverhalten.

Aus der EP 0 356 334 A1 ist weiterhin eine Einrichtung zur berührungslosen Energie- und Datenübertragung, insbesondere für ein programmierbares elektronisches Identifikationssystem bekannt, das eine stromversorgte elektrische Primäreinheit mit elektronischer Ansteuerung und eine elektrische Sekundäreinheit aufweist. Diese sind über induktive Koppelelemente gekoppelt, wobei die Primäreinheit informationsmodulierte Energieimpulse aussendet, die auf die Sekundäreinheit wirken. Die Sekundäreinheit weist ein die Energieimpulse ausnutzendes Energieversorgungs- und Empfangssystem auf. Durch das Energieversorgungs- und Empfangssystem wird eine Rückwirkung auf die Primäreinheit bewirkt. Die Primäreinheit weist Mittel zur Erzeugung von Induktionsspannungsstößen und zur Auswertung der Rückwirkung der Sekundäreinheit auf die Primäreinheit auf. Diese bekannte Einrichtung weist für kritische Anwendungsfälle keine ausreichende Betriebssicherheit auf. Der betriebene Aufwand ist trotzdem relativ hoch.

Der vorliegenden Erfindung liegt die Aufgabe zugrunde, eine Einrichtung zur berührungslosen Energie- und Datenübertragung, insbesondere für ein programmierbares, elektronisches Identifikationssystem anzugeben, die bei hoher Betriebssicherheit und Lebensdauer bezüglich der Energie- und Datenübertragung einfach ausgebildet ist und wobei der Aufwand bezüglich Modulation, Demodulation und Frequenzabstimmung niedrig ist bzw. entfällt.

Die Lösung der Aufgabe besteht im wesentlichen darin, daß die die Primäreinheit zur Erzeugung hochenergetischer Induktionsspannungsstöße und zur Auswertung der Rückwirkung der Sekundäreinheit auf die Primäreinheit ein schwingfähiges System und ein primäres Koppelelement enthält, wobei das primäre Koppelelement Teil des schwingfähigen Systems ist, das
a) neben dem Koppelelement einen elektronischen Schalter und eine Energiequelle aufweist, wobei elektronischer Schalter, Energiequelle und Koppelelement elektrisch in Reihe geschaltet sind,
b) wobei der elektronische Schalter einen Transistor aufweist,
c) wobei parallel zum Transistor ein Kondensator und eine Diode geschaltet sind und
d) wobei der Kondensator durch die parasitäre Kapazität des Transistors realisiert und die Diode Bestandteil des Transistors ist.

Von besonderem Vorteil ist es dabei, daß das schwingfähige System als Reihenschaltung von elektronischem Schalter, Koppelelement, Energiequelle und Meßwiderstand ausgebildet ist. Dadurch eröffnen sich eine Vielzahl vorteilhafter Möglichkeiten. Zum einen kann auf eine HF-Oszillatorschaltung mit ihren Problemen, wie z.B. Abstimmung und Parameteränderung der Bauteile, verzichtet werden. Weiterhin kann auf Elemente zur Datenrichtungsbeeinflussung, z.B. Datenrichtungsschalter, und deren aufwendige Ansteuerung verzichtet werden, da das schwingfähige System vorteilhaft als Sende- und Empfangssystem ausgestaltet ist.

In einer besonders vorteilhaften Ausgestaltung wird der elektronische Schalter als Transistor ausgeführt, wobei die Kapazität und die Diode Bestandteile des Transistors sind. Der Bauteilaufwand und damit Baugröße und Baukosten verringern sich.

Eine weitere vorteilhafte Ausgestaltung ist, daß die Primäreinheit ein Rechteckgenerator und ein logisches Element aufweist. Mit einfachsten digitalen Bausteinen wird so eine Modulatorschaltung realisiert.

Eine weitere vorteilhafte Ausgestaltung ist das Empfangssystem in der Sekundäreinheit, wobei dieses aufgrund ausschließlicher Ausnutzung positiver Halbwellen zur Energie- und Datenübertragung als Einweggleichrichter (Diode) mit Siebkondensator ausgebildet ist. Dadurch ergibt sich eine vorteilhafte Bauteilersparnis. Besonders vorteilhaft ist auch ein mehrfach programmierbares Speichermittel, z.B. ein EEPROM, in dem Microcontroller. Damit kann die Sekundäreinheit informationstechnisch an mehrere verschiedene Primäreinheiten angebunden werden.

Eine besonders vorteilhafte Ausgestaltung ist die sekundäre Belastungsänderung mittels einer steuerbaren Last. Der Vorteil liegt darin, daß auf einen zusätzlichen HF-Oszillator mit den bekannten Nachteilen verzichtet werden kann.

Eine weitere vorteilhafte Ausgestaltung zeichnet sich dadurch aus, daß die Koppelelemente als Primär- und Sekundärspulen eines Lufttransformators ausgebildet sind, wobei die Spulenkörper, vorteilhaft knopfförmig mit Rand- und Mittelsteg, ausgebildet sind. Die kompakte Bauform bietet einerseits bestmögliche Kopplung und damit Übertragungssicherheit, andererseits vielseitige Verwendungsmöglicheiten auch bei erschwerten räumlichen Bedingungen oder größeren Lageabweichungen.

Weitere Vorteile und Einzelheiten ergeben sich aus der nachfolgenden Beschreibung eines Ausführungsbeispiels, anhand der Zeichnungen und in Verbindung mit den Unteransprüchen.

Es zeigen:
FIG 1 eine Prinzipschaltung der Primäreinheit,
FIG 2 eine Prinzipschaltung der Sekundäreinheit,
FIG 3, 4 und 5 Singalverläufe und
FIG 6 ein Primär- und Sekundärkoppelelement.

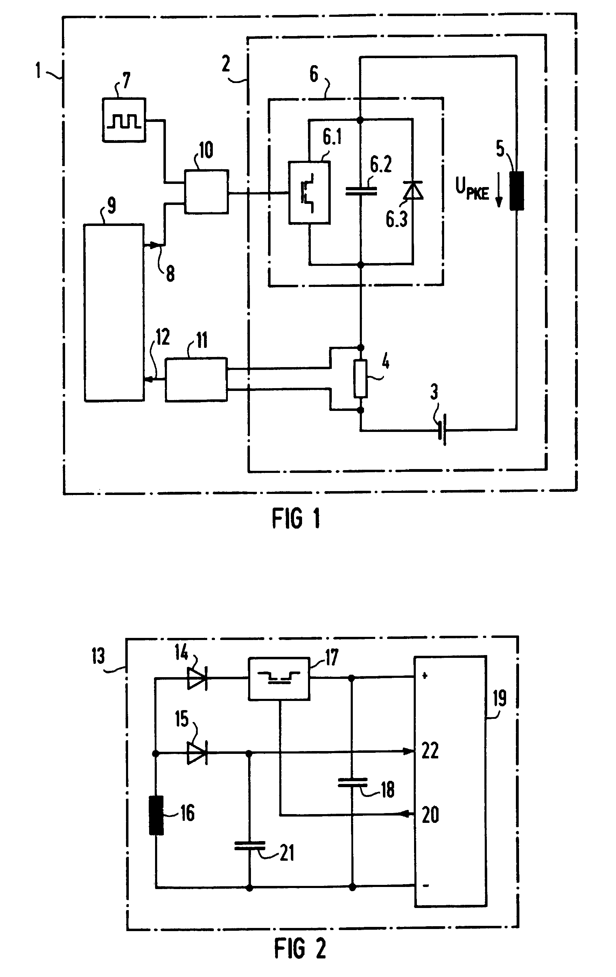

Die Primäreinheit 1 besteht gemäß FIG 1 im wesentlichen aus einem schwingfähigen System 2, realisiert durch die Reihenschaltung von Energiequelle 3, Meßwiderstand 4, Primärkoppelelement 5 und elektronischem Schalter 6. Der elektronische Schalter 6 ist zum besseren Verständnis als Ersatzschaltung dargestellt, wobei diese als Parallelschaltung von Schaltelement 6.1, parasitärer Kapazität 6.2 und Diode 6.3 ausgebildet ist. Der Ausgang eines Rechteckgenerators 7, der z.B. im 100-200 KHz Bereich arbeitet, und der Datenausgang 8 der Ein- Ausgabeelektronik 9 eines übergeordneten Steuersystems, bilden die Eingänge einer logischen Verknüpfungseinheit 10 (z.B. einem NAND-Gatter), deren Ausgang mit dem Steuereingang des elektronischen Schalters 6 verbunden ist. Parallel zum Meßwiderstand 4 liegt ein Auswertefilter 11, dessen Ausgang mit dem Dateneingang 12 der Ein- Ausgabeelektronik 9 verbunden ist.

FIG 2 zeigt die Prinzipschaltung der Sekundäreinheit 13 gemäß der Erfindung. Die Dioden 14 und 15 sind anodenseitig mit dem Sekundärkoppelement 16 verbunden. Kathodenseitig liegt die Diode 14 an dem Eingang des elektronischen Schalters 17 der ausgangsseitig mit einem Kondensator 18 und dem positiven Spannungseingang des Microcontrollers 19 verbunden ist. Der Microcontroller weist vorteilhaft ein freiprogrammierbares Speichermittel, z.B. ein EEPROM, auf. Der Steuereingang des elektronischen Schalters 17 ist mit einem Datenausgang 20 des Microcontrollers 19 verbunden. Die Diode 15 ist kathodenseitig mit einem Kondensator 21 und einem Dateneingang 22 des Microcontrollers 19 verbunden. Weiterhin sind die noch offenen Klemmen des Sekundärkoppelelements 16 und der Kondensatoren 18 und 21 mit dem negativen Spannungseingang des Microcontrollers 19 verbunden.

Im folgenden wird die Wirkungsweise der Primäreinheit 1 und der Sekundäreinheit 13 beschrieben:

Die Energieversorgung der Primäreinheit 1 kann je nach Anwendungsfall entweder über netzunabhängige Elemente oder über ein Netzteil erfolgen. Die Einschaltung der Primäreinheit erfolgt z.B. über einen Reedkontakt, der von der Sekundäreinheit betätigt wird. Anschließend werden Datentelegramme ausgetauscht, wobei die Energieversorgung bei falscher Rückantwort vorteilhaft abgeschaltet wird.

Über das logische Element 10 wird die Rechteckimpulsfolge des Rechteckgenerators 7 mit der binären Sendeinformation der Ein-Ausgabeelektronik 9 moduliert. Die Ein- Ausgabeelektronik 9 ist z.B. mit einem übergeordneten Leitsystem verbunden, wobei die Möglichkeit zur Programmierung der Ein- Ausgabeelektronik 9 besteht. Liegt das Ausgangspotential des logischen Elementes 10 auf hohem Potential, so wird der elektronische Schalter 6 in den leitenden Zustand versetzt. Von der Energiequelle 3 bewirkt, steigt jetzt der Strom durch das Primärkoppelelement 5 linear an, wodurch dort Energie gespeichert wird. Liegt nun ein niedriges Potential an dem Steuereingang des elektronischen Schalters 6, so wird dieser geöffnet. Das Koppelelement versucht nun den Stromfluß aufrechtzuerhalten und bildet mit der parasitären Kapazität 6.2 des elektronischen Schalters 6 einen Schwingkreis, wobei vorteilhaft zusammenwirkend eine gedämpfte Schwingung entsteht.

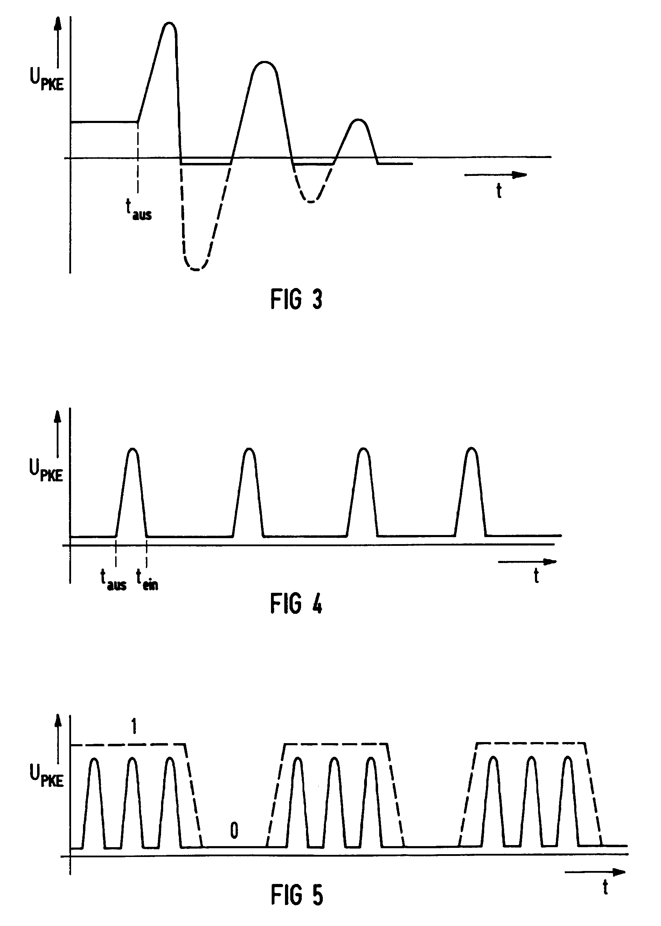

FIG 3 zeigt den zeitlichen Verlauf der Induktionsspannung U_{PKE} des Primärkoppelelementes 5. Bis zum Zeitpunkt tₐᵤₛ ist die Spannung an dem Koppelelement konstant. Nach dem Zeitpunkt tₐᵤₛ ergibt sich eine gedämpfte Schwingung mit der Eigenfrequenz des Schwingkreises; dieses Verhalten ist strichliert dargestellt. Der durchgezogene Spannungsverlauf stellt die positiven Spannungshalbwellen dar, die dadurch entstehen, daß der elektronische Schalter 6 eine Diode 6.3 aufweist. Der negative Anteil, z.B. 0,7 V, ergibt sich aufgrund der Schleusenspannung der Diode 6.3.

FIG 4 zeigt nun den Induktionsspannungsverlauf U_{PKE} des Primärkoppelelementes 5 bei entsprechender Ansteuerung des schwingfähigen Systems 2. Er wird erreicht, indem der elektronische Schalter 6 noch während der negativen Flanke der ersten positiven Halbwelle, z.B. zum Zeitpunkt tₑᵢₙ, wieder eingeschaltet wird. Dadurch steigt der Stromfluß im schwingfähigen System 2 wieder linear an. Dies erfolgt in Abhängigkeit vom Takt des Rechteckgenerators 7. Die induzierte Spannungsspitze nach Stromunterbrechung ist dabei weitgehend konstant und kann typischerweise 200 V betragen. Dies ermöglicht selbst bei ungünstiger Kopplung der Koppelelemente sehr vorteilhaft einen sicheren Energie- und Datentransfer.

FIG 5 zeigt den Induktionsspannungsverlauf U_{PKE} des Primärkoppelelementes bei vorteilhafter Pulsamplitudenmodulation. Die Codierung wird dabei so gewählt, daß auf eine Wertigkeit 0, in der FIG 5 als Spannungsminimum dargestellt, mindestens eine Wertigkeit 1, als Spannungsmaximum dargestellt, folgt. Dadurch ist, wiederum sehr vorteilhaft, die Energieversorgung der Sekundäreinheit auch während der Datenübertragung gesichert. Das wie vorstehend modulierte Energie/Daten-Signal wird über eine transformatorische Kopplung der beiden Koppelelemente zur Sekundäreinheit 13 übertragen.

Die in dem sekundären Koppelelement 16 induzierte Spannung wird zweifach ausgewertet. Einerseits wird über eine Filterschaltung, bestehend aus Diode 15 und Kondensator 21, die Sendeinformation ausgekoppelt und einem Microcontroller 19 zur Auswertung zugeführt. Andererseits gelangt das Signal über die Diode 14 und einen elektronischen Schalter 17 zu einem Kondensator 18, der aufgeladen wird und somit zur Energieversorgung der Sekundäreinheit 13 dient. Energieeinbrüche, z.B. durch Austastung des Energiestroms bei Wertigkeit 0, werden von dem Kondensator 18 zuverlässig überbrückt.

Die Rückwirkung der Sekundäreinheit 13 auf die Primäreinheit 1 erfolgt über eine Belastungsänderung in der Sekundäreinheit 13. Hierbei wird der elektronische Schalter 17 von dem Microcontroller 19 angesteuert, wodurch sich die Stromaufnahme der Sekundäreinheit 13 entsprechend der zu übertragenden Information ändert. Diese Änderungen können aufgrund der transformatorischen Kopplung zwischen Primär- und Sekundäreinheit, z.B. durch Spannungsänderungen an einem Meßwiderstand 4 im schwingfähigen System 2, erfaßt und ausgewertet werden. Die Verarbeitung des Meßsignals erfolgt in dem Auswertefilter 11, das vorzugsweise als Tiefpaßfilter dritter Ordnung mit Signalgleichrichtung ausgebildet ist.

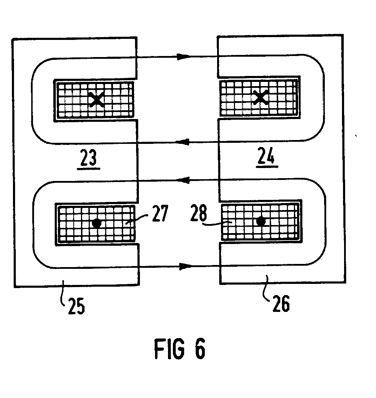

FIG 6 zeigt ein Ausführungsbeispiel eines Primärkoppelelementes 23 und eines Sekundärkoppelelementes 24. Beide sind in ihrer Form und Funktion vorteilhaft indentisch. Die Spulenkörper 25, 26 sind als Transformatorkerne ausgeführt. Durch ihre Formgebung, z.B. knopfförmig mit ausgeprägtem Mittel- und Randsteg, wird eine besonders vorteilhafte Flußführung erzielt. Dadurch werden hohe Induktionsdichten und geringe Streuflüsse erreicht, womit eine sichere Kopplung gewährleistet wird. Störende Einflüsse, z.B. durch Verschmutzung oder Lagefehler der Koppelelemente 23, 24, verlieren vorteilhaft an Einfluß. Der Luftspalt zwischen den Koppelelementen 23, 24 kann im Millimeterbereich liegen. Die elektrischen Spulen 27, 28 sind vorteilhaft wirkungsvoll um die Mittelstege der Spulenkörper 25, 26 herum angeordnet.

Insgesamt ergibt sich eine sowohl kompakte als auch unempfindliche (Verschmutzung, Lagefehler etc.) Anordnung, die sowohl den Ansprüchen eines Schlüssel-Schloßsystems als auch eines Positions-Identifikationssystems im Industrie- und Hausbereich gerecht wird. Über die Programmierung und Umprogrammierung der Microcontroller, z.B. durch ein übergeordnetes Kontroll- und Leitsystem, ist dabei eine problemlose Anpassung an alle Indentifikations- und Kontrollanforderungen, etwa im Hotelbereich, bei Kraftfahrzeugen, in Sicherheitsbereichen oder bei Robotern aller Art möglich.

## Patentansprüche

1. Einrichtung zur berührungslosen Energie- und Datenübertragung, insbesondere für ein programmierbares elektronisches Identifikationssystem, mit einer stromversorgten elektrischen Primäreinheit (1) mit elektronischer Ansteuerung und einer elektrischen Sekundäreinheit (13), wobei diese über induktive Koppelelemente (5,16) gekoppelt sind und wobei die Primäreinheit (1) informationsmodulierte Energieimpulse aussendet, die auf die Sekundäreinheit (13) wirken, die ein die Energieimpulse ausnutzendes Energieversorgungs- und Empfangssystem aufweist, wobei durch das Energieversorgungssystem eine Rückwirkung auf die Primäreinheit (1) bewirkt wird, **dadurch gekennzeichnet,** daß die Primäreinheit (1) zur Erzeugung hochenergetischer Induktionsspannungsstöße und zur Auswertung der Rückwirkung der Sekundäreinheit (13) auf die Primäreinheit (1) ein schwingfähiges System (2) und ein primäres Koppelelement (5) enthält, wobei das primäre Koppelelement (5) Teil des schwingfähigen Systems (2) ist, das
a) neben dem Koppelelement (5) einen elektronischen Schalter (6) und eine Energiequelle (3) aufweist, wobei elektronischer Schalter (6), Energiequelle (3) und Koppelelement (5) elektrisch in Reihe geschaltet sind,
b) wobei der elektronische Schalter (6) einen Transistor (6.1) aufweist,
c) wobei parallel zum Transistor (6.1) ein Kondensator (6.2) und eine Diode (6.3) geschaltet sind und
d) wobei der Kondensator (6.2) durch die parasitäre Kapazität des Transistors realisiert und die Diode (6.3) Bestandteil des Transistors ist.

2. Einrichtung nach Anspruch 1, **dadurch gekennzeichnet,** daß die Elektronik der Primäreinheit (1) einen Rechteckgenerator (7), ein logisches Element (10) und eine Ein-Ausgabeelektronik (9) aufweist.

3. Einrichtung nach Anspruch 2, **dadurch gekennzeichnet,** daß der Ausgang des Rechteckgenerators (7) und der Datenausgang (8) der Ein-Ausgabeelektronik (9) mit den Eingängen des logischen Elementes (10), z.B. einem NAND-Gatter, verbunden sind, wobei dessen Ausgang mit dem Steuereingang des elektronischen Schalters (6) verbunden ist.

4. Einrichtung nach einem oder mehreren der vorhergehenden Ansprüche, **dadurch gekennzeichnet,** daß das schwingfähige System (2) einen Meßwiderstand (4) aufweist, dem ein Tiefpaßfilter (11), z.B. ein Teilpaßfilter dritter Ordnung mit Signalgleichrichtung, parallel geschaltet ist, dessen Ausgang mit dem Dateneingang (12) der Ein-Ausgabeelektronik (9) verbunden ist.

5. Einrichtung nach einem oder mehreren der vorhergehenden Ansprüche, **dadurch gekennzeichnet,** daß das Empfangssystem der Sekundäreinheit eine Diode (15), einen Kondensator (21) und einen Microcontroller (19) aufweist.

6. Einrichtung nach Anspruch 5, **dadurch gekennzeichnet,** daß die Diode (15) anodenseitig mit dem Koppelelement (16) der Sekundäreinheit und kathodenseitig mit dem Dateneingang (22) des Microcontrollers (19) verbunden ist, wobei zusätzlich ein Kondensator (21) von dem Dateneingang (22) des Microcontrollers (19) zu dem negativen Spannungseingang des Microcontrollers (19) geschaltet ist.

7. Einrichtung nach einem oder mehreren der vorhergehenden Ansprüche, **dadurch gekennzeichnet,** daß das Energieversorgungssystem der Sekundäreinheit eine Diode (14), eine steuerbare Last (17) und einen Kondensator (18) aufweist.

8. Einrichtung nach Anspruch 7, **dadurch gekennzeichnet,** daß der Kondensator (18) parallel zu den Spannungseingängen des Microcontrollers (19) geschaltet ist.

9. Einrichtung nach Anspruch 7, **dadurch gekennzeichnet,** daß die Diode (14) anodenseitig mit dem Koppelelement (16) und kathodenseitig mit der steuerbaren Last (17) verbunden ist, wobei der Ausgang der steuerbaren Last (17) mit dem positiven Spannungseingang des Microcontrollers (19) und dem Kondensator (18) verbunden ist.

10. Einrichtung nach einem oder mehreren der Ansprüche 7 bis 9 sofern abhängig von Anspruch 5, **dadurch gekennzeichnet,** daß die steuerbare Last (17) aus einem elektronischen Schalter, z.B. Transistor, besteht, dessen Steuereingang mit einem Datenausgang (20) des Microcontrollers (19) verbunden ist.

11. Einrichtung nach einem oder mehreren der vorhergehenden Ansprüche, **dadurch gekennzeichnet,** daß die Koppelelemente (5,16) als Primär- und Sekundärspulen eines Luftspalttransformators ausgebildet sind.

12. Einrichtung nach einem oder mehreren der vorhergehenden Ansprüche, **dadurch gekennzeichnet,** daß die Koppelelemente (5,16) Spulenkörper (25,26), vorzugsweise knopfförmig mit Rand- und Mittelsteg, zur Flußkopplung zwischen Primärspule und Sekundärspule aufweisen.

13. Einrichtung nach einem oder mehreren der vorhergehenden Ansprüche, **dadurch gekennzeichnet,** daß die Einrichtung in einem, vorzugsweise programmierbaren, elektronischen Kontrollsystem verwendet wird.

14. Einrichtung nach einem oder mehreren der vorhergehenden Ansprüche, **dadurch gekennzeichnet,** daß die Einrichtung in einem elektronisch/mechanischen codierten, vorzugsweise programmierbaren, Schlüssel-Schloßsystem verwendet wird.

## Claims

1. Device for non-contact power and data transmission, in particular for a programmable electronic identification system, having a current-supplied electrical primary unit (1) with electronic activation and an electrical secondary unit (13), whereby these are coupled by way of inductive coupling elements (5, 16) and whereby the primary unit (1) emits information-modulated power pulses which act on the secondary unit (13), which has a power-supply and receiving system utilizing the power pulses, whereby by way of the power-supply system a reaction to the primary unit (1) is effected, characterized in that the primary unit (1) contains a resonant system (2) and a primary coupling element (5) for the generation of high-energy induction voltage surges and for the evaluation of the reaction of the secondary unit (13) to the primary unit (1), whereby the primary coupling element (5) is part of the resonant system (2) which
a) in addition to the coupling element (5) has an electronic switch (6) and a power source (3), whereby the electronic switch (6), the power source (3) and the coupling element (5) are connected electrically in series,
b) whereby the electronic switch (6) has a transistor (6.1),
c) whereby a capacitor (6.2) and a diode (6.3) are connected in parallel with the transistor (6.1) and
d) whereby the capacitor (6.2) is realized by the stray capacitance of the transistor and the diode (6.3) is a component part of the transistor.

2. Device according to claim 1, characterized in that the electronics of the primary unit (1) have a square-wave generator (7), a logical element (10) and input and output electronics (9).

3. Device according to claim 2, characterized in that the output of the square-wave generator (7) and the data output (8) of the input and output electronics (9) are connected to the inputs of the logical element (10), for example a NAND gate, whereby its output is connected to the control input of the electronic switch (6).

4. Device according to one or more of the preceding claims, characterized in that the resonant system (2) has a measuring resistor (4), with which there is connected in parallel a low-pass filter (11), for example a partial pass filter of the third order with signal rectification, the output of which is connected to the data input (12) of the input and output electronics (9).

5. Device according to one or more of the preceding claims, characterized in that the receiving system of the secondary unit has a diode (15), a capacitor (21) and a microcontroller (19).

6. Device according to claim 5, characterized in that the diode (15) is connected on the anode side to the coupling element (16) of the secondary unit and on the cathode side to the data input (22) of the microcontroller (19), whereby in addition a capacitor (21) is connected from the data input (22) of the microcontroller (19) to the negative voltage input of the microcontroller (19).

7. Device according to one or more of the preceding claims, characterized in that the power-supply system of the secondary unit has a diode (14), a controllable load (17) and a capacitor (18).

8. Device according to claim 7, characterized in that the capacitor (18) is connected in parallel with the voltage inputs of the microcontroller (19).

9. Device according to claim 7, characterized in that the diode (14) is connected on the anode side to the coupling element (16) and on the cathode side to the controllable load (17), whereby the output of the controllable load (17) is connected to the positive voltage input of the microcontroller (19) and to the capacitor (18).

10. Device according to one or more of claims 7 to 9 if dependent on claim 5, characterized in that the controllable load (17) comprises an electronic switch, for example transistor, the control input of which is connected to a data output (20) of the microcontroller (19).

11. Device according to one or more of the preceding claims, characterized in that the coupling elements (5, 16) are constructed as primary and secondary coils of an air-gap transformer.

12. Device according to one or more of the preceding claims, characterized in that the coupling elements (5, 16) have coil bodies (25, 26), preferably knob-shaped with edge bar and cross bar, for flux coupling between the primary coil and the secondary coil.

13. Device according to one or more of the preceding claims, characterized in that the device is used in an electronic control system which can preferably be programmed.

14. Device according to one or more of the preceding claims, characterized in that the device is used in an electronically/mechanically coded, preferably programmable, key-lock system.

## Revendications

1. Dispositif destiné à la transmission d'énergie et de données sans contact, notamment pour un système d'identification électronique programmable, comportant une unité primaire (1) électrique alimentée en courant et à commande électronique et comportant une unité secondaire (13) électrique, ces unités étant couplées par l'intermédiaire d'éléments de couplage (5, 16) inductifs et l'unité primaire (1) émettant des impulsions d'énergie, modulées par l'information, qui agissent sur l'unité secondaire (13) qui comporte un système de réception et d'alimentation en énergie exploitant les impulsions d'énergie, le système d'alimentation en énergie provoquant une réaction sur l'unité primaire (1), caractérisé par le fait que l'unité primaire (1) contient, pour produire des chocs de tension d'induction de grande énergie et pour évaluer la réaction de l'unité secondaire (13) sur l'unité primaire (1), un système susceptible d'osciller (2) et un élément primaire de couplage (5), l'élément primaire de couplage (5) faisant partie du système susceptible d'osciller (2) qui
a) comporte en plus de l'élément de couplage (5) un interrupteur électronique (6) et une source d'énergie (3), l'interrupteur électronique (6), la source d'énergie (3) et l'élément de couplage (5) étant branchés électriquement en série,
b) l'interrupteur électronique (6) comportant un transistor (6.1),
c) un condensateur (6.2) et une diode (6.3) étant branchés en parallèle avec le transistor (6.1), et
d) le condensateur (6.2) étant mis en oeuvre par la capacité parasite du transistor et la diode (6.3) faisant partie du transistor.

2. Dispositif selon la revendication 1, caractérisé par le fait que le dispositif électronique de l'unité primaire (1) comporte un générateur de tension rectangulaire (7), un élément logique (10) et un dispositif électronique d'entrée/sortie (9).

3. Dispositif selon la revendication 2, caractérisé par le fait que la sortie du générateur de tension rectangulaire (7) et la sortie de données (8) du dispositif électronique d'entrée/sortie (9) sont reliées aux entrées de l'élément logique (10), par exemple une porte NON-ET, la sortie de ce dernier étant reliée à l'entrée de commande de l'interrupteur électronique (6).

4. Dispositif selon une ou plusieurs des revendications précédentes, caractérisé par le fait que le système susceptible d'osciller (2) comporte une résistance de mesure (4) en parallèle avec laquelle est branché un filtre passe-bas (11), par exemple un filtre passe-bas de troisième ordre avec redressement du signal, dont la sortie est reliée à l'entrée de données (12) du dispositif électronique d'entrée/sortie (9).

5. Dispositif selon une ou plusieurs des revendications précédentes, caractérisé par le fait que le système de réception de l'unité secondaire comporte une diode (15), un condensateur (21) et un microcontrôleur (19).

6. Dispositif selon la revendication 5, caractérisé par le fait que la diode (15) est reliée par son anode à l'élément de couplage (16) de l'unité secondaire et par sa cathode à l'entrée de données (22) du microcontrôleur (19), un condensateur (21) étant branché en plus entre l'entrée de données (22) du microcontrôleur (19) et l'entrée de tension négative du microcontrôleur (19).

7. Dispositif selon une ou plusieurs des revendications précédentes, caractérisé par le fait que le système d'alimentation en énergie de l'unité secondaire comporte une diode (14), une charge (17) pouvant être commandée et un condensateur (18).

8. Dispositif selon la revendication 7, caractérisé par le fait que le condensateur (18) est branché en parallèle avec les entrées de tension du microcontrôleur (19).

9. Dispositif selon la revendication 7, caractérisé par le fait que la diode (14) est reliée par son anode à l'élément de couplage (16) et par sa cathode à la charge (17) pouvant être commandée, la sortie de la charge (17) pouvant être commandée étant reliée à l'entrée de tension positive du microcontrôleur (19) et au condensateur (18).

10. Dispositif selon une ou plusieurs des revendications 7 à 9 lorsqu'elles dépendent de la revendication 5, caractérisé par le fait que la charge (17) pouvant être commandée est constituée d'un interrupteur électronique, par exemple d'un transistor, dont l'entrée de commande est reliée à une sortie de données (20) du microcontrôleur (19).

11. Dispositif selon une ou plusieurs des revendications précédentes, caractérisé par le fait que les éléments de couplage (5, 16) sont conçus comme des bobines primaire et secondaire d'un transformateur à entrefer.

12. Dispositif selon une ou plusieurs des revendications précédentes, caractérisé par le fait que les éléments de couplage (5, 16) comportent des armatures de bobines de champ (25, 26), de préférence en forme de bouton et avec des saillies au bord et au centre, pour le couplage du flux entre la bobine primaire et la bobine secondaire.

13. Dispositif selon une ou plusieurs des revendications précédentes, caractérisé par le fait que le dispositif est utilisé dans un système de contrôle électronique, de préférence programmable.

14. Dispositif selon une ou plusieurs des revendications précédentes, caractérisé par le fait que le dispositif est utilisé dans un système clé-serrure, codé électronique/mécanique, de préférence programmable.
